(19) Europäisches Patentamt
European Patent Office
Office européen des brevets

(11) EP 1 278 050 A1

(12) **EUROPEAN PATENT APPLICATION**

(43) Date of publication:
**22.01.2003 Bulletin 2003/04**

(51) Int Cl.$^7$: **G01J 3/453**

(21) Application number: **01810714.4**

(22) Date of filing: **18.07.2001**

(84) Designated Contracting States:
**AT BE CH CY DE DK ES FI FR GB GR IE IT LI LU MC NL PT SE TR**
Designated Extension States:
**AL LT LV MK RO SI**

(71) Applicant: **C.S.E.M. CENTRE SUISSE D'ELECTRONIQUE ET DE MICROTECHNIQUE SA**
**2007 Neuchâtel (CH)**

(72) Inventor: **Boer, Gerben Christiaan**
**2072 St. Blaise (CH)**

(74) Representative:
**Patentanwälte Feldmann & Partner AG**
**Kanalstrasse 17**
**8152 Glattbrugg (CH)**

(54) **Polarization interferometer with reduced noise**

(57) The polarization interferometer (1) with reduced noise comprises a birefringet medium (3) and means (4) for making two orthogonally polarized light components interfere. A liquid-crystal cell (7) is placed inside the interferometer (1). Means (71) for applying an electric field to the liquid-crystal cell (7) are provided such that the polarization of linearly polarized light (90) is rotated by the liquid-crystal cell (7) depending on the electric field. For reducing noise in the interferogram, an in-phase interferogram (99.1) is recorded; then an anti-phase (99.2) interferogram is recorded, whereby the polarization of linearly polarized light passing through said liquid-crystal cell has been rotated by 90°. The anti-phase interferogram (99.2) is substracted from the in-phase interferogram (99.1) resulting in noise reduction.

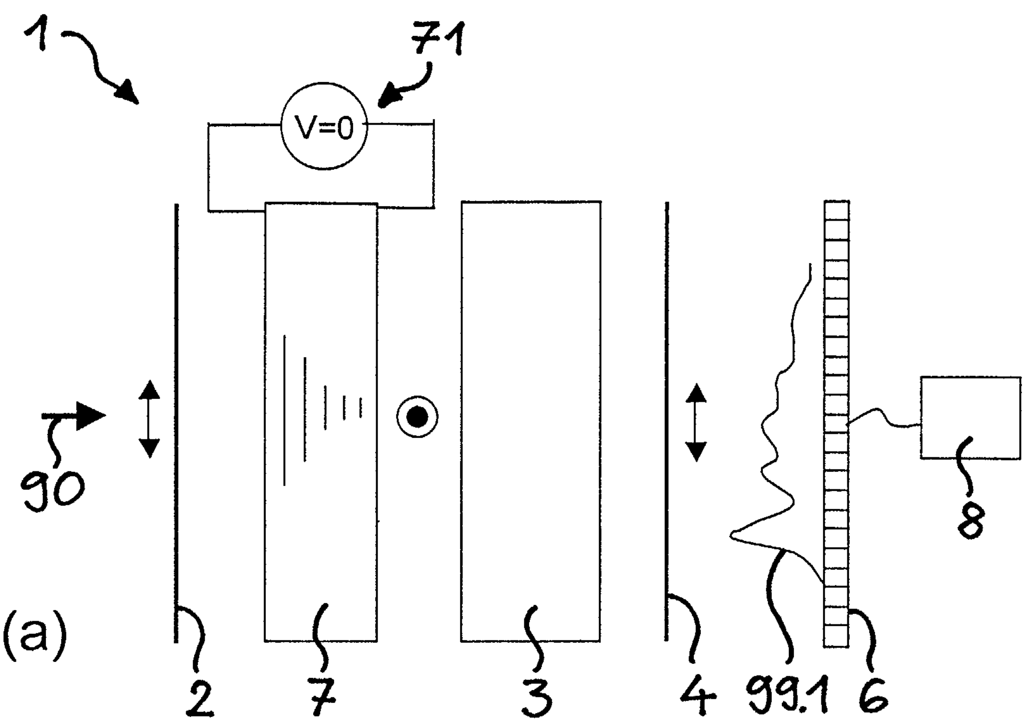


Fig. 4(a)

EP 1 278 050 A1

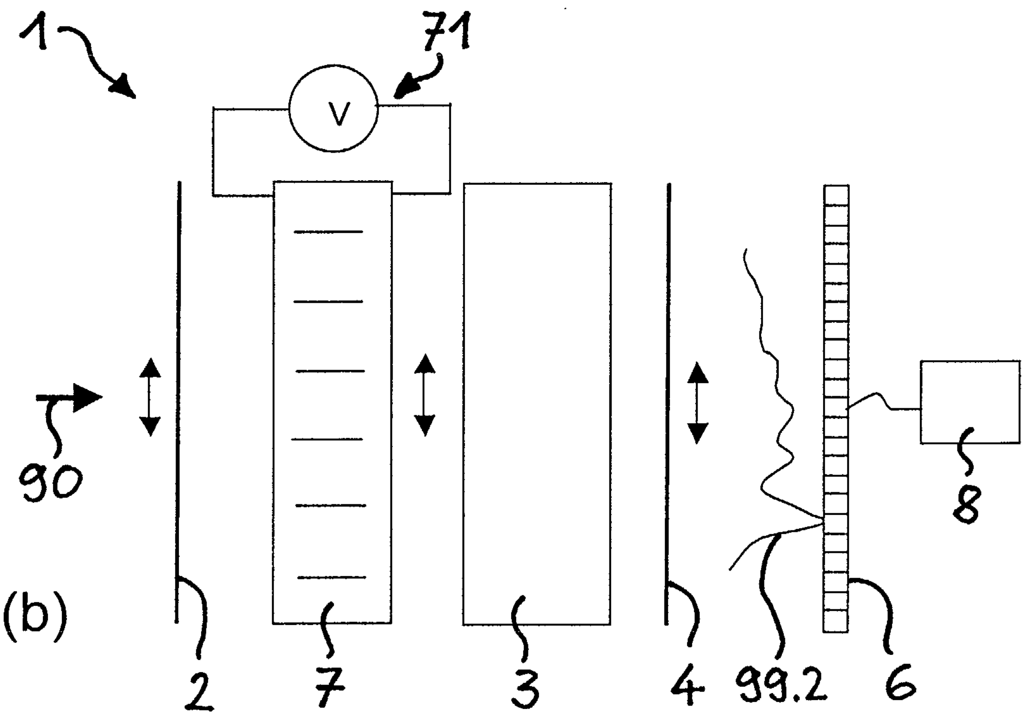


Fig. 4(b)

## Description

### Field of the invention

This invention lies in the field of polarization interferometry and relates to a method for reducing noise due to local defects or other static perturbations in polarization interferometers and to a polarization interferometer with reduced noise, according to the preambles of the independent claims.

### Background of the invention

In an interferometer, incident light is split by a suitable beam splitter element into two or more beams. The beams propagate along certain optical paths, generally experience a certain path difference and are finally recombined (or superposed) to cause an interference pattern. An example is the well-known Michelson interferometer with a beam splitter for splitting and recombining light.

A polarization interferometer uses a birefringent medium (for example a uniaxial crystal plate) as beam splitter. The ordinary and extraordinary rays produced by the birefringent element (crystal) oscillate parallel and perpendicular to the optical axis, respectively. The two rays traverse the crystal along different optical paths and can interfere in the region of space where they superpose.

Unpolarized light can be decomposed into two polarized light components that are mutually incoherent, with electric vectors oscillating in arbitrarily chosen perpendicular directions. This is of course not suitable for an interference of the two electric fields. Therefore, the incident light must be linearly polarized before entering the birefringent medium. Light can easily be polarized with, e.g., polaroid sheets. Normally, the incident light is polarized at ±45° with respect to the optical axis (i.e., at 45° with respect to the ordinary and extraordinary axes).

**Figure 1** schematically shows a conventional polarization interferometer 101. Incident light 190 is linearly polarized at 45° by a first polarizer 102. It penetrates a birefringent medium 103, e.g., a wedge-shaped crystal. The light 190 is split by the crystal 103 into two optical paths 191, 192: a first path 191 that experiences the ordinary index $n_o$ of the birefringent medium 103 and a second path 192 that experiences the extraordinary index $n_e$. The optical path difference (OPD) at the output of the crystal 103 is given by

$$OPD=(n_e-n_o)\cdot d\ ,$$

where d is the effective crystal thickness. In order to let the two beams 191, 192 interfere, a second polarizer or an analyzer 104 is placed behind the output of the crystal 103. Ideally this analyzer 104 is oriented either parallel or perpendicular to the first polarizer 102.

Variations of the crystal thickness d result in OPD variations and finally in a spatial interference pattern 199. At the output of an interferometer 101 comprising a prism-shaped crystal 103 between crossed polarizers 102, 104, as shown in Fig. 1, we obtain the intensity distribution

$$I(x)=\frac{I_0}{2}\left[1+\cos\left(\frac{2\pi}{\lambda}\right)OPD(x)\right]\quad ,$$

where $I_0$ is the incident light intensity, λ is the light wavelength in vacuum, and OPD(x) is the optical path difference varying along the x axis. An interferogram 199 sketched in Fig. 1 can be recorded, e.g., by an optoelectronic detector array 106, and stored in a storage device (not shown) . An optical system 105 may be used for imaging the interference pattern onto the detector array 106.

The wedge-shaped plate 103 shown in Fig. 1 is one example of a birefringent element for use in a polarization interferometer, but there exist many further possible arrangements of birefringent crystal plates. Some of them are schematically illustrated in Figure 2, such as a Soleil compensator 103.1 (**Figure 2(a)**), a Wollaston prism 103.2 (**Figure 2(b)**), or a Savart polariscope 103.3 (**Figure 2(c)**). Most of those configurations are discussed in M. Françon and S. Mallick, "Polarization Interferometers", Wiley-Interscience, 1971.

The known interferometers 101 suffer from the following disadvantage. If there is for example contamination such as a dust particle somewhere in the system or if the polarizers 102, 104 have fabrication defects, this can have annoying consequences on the interferogram 199, especially when the defects are near the detector 106. M. Hashimoto and S. Kawata proposed in "Multichannel Fourier-transform infrared spectrometer", Applied Optics, Vol. 31, No. 28, 1 October 1992, 6096-6101, a method for suppressing background pattern resulting from such defects. This method is schematically shown in **Figures 3(a)-(c).** A first interferogram 199.1 (intensity $I_1$(x'), "in-phase interferogram") is measured with the polarization axis of the polarizer 102 parallel to that of the analyzer 104 as shown in **Figure 3(a)**. After recording and storage of the first interferogram 199.1, a second interferogram 199.2 (intensity $I_2$ (x'), "anti-phase interferogram") is recorded; however, for recording of the second interferogram 199.2, the polarization axes of the polarizer 102 and the analyzer 104 are perpendicular as shown in **Figure 3(b)**. At zero path difference, the first interferogram 199.1 (parallel arrangement, Fig. 3(a)) exhibits a positive peak and the second interferogram 199.2 (perpendicular arrangement, Fig. 3(a)) exhibits a negative peak. The background pattern B does not interfere and is independent of the polarization, thus it is identical in both recorded

interferograms 199.1 and 199.2. When subtracting the anti-phase interferogram 199.2 from the in-phase interferogram 199.1, the background pattern B is suppressed and the signal S or interference pattern is added. This is evident from the following equation:

$$I=I_1-I_2=(S+B)-(-S+B)=2S\ .$$

Therefore, the result as illustrated in **Figure 3 (c)** is a third interferogram 199.3 where the background B disappeared and where the interference signal S is twice as large.

A serious problem of the setup shown in Figs. 3(a) and 3(b) is that the polarizer 102 (or analyzer 104) has to be rotated mechanically between the two measurements. This costs time, an additional mechanical device must be integrated in the system, and it needs considerable space. Moreover, the precision of the resulting interferogram 199.3 may suffer from undesired vibrations and/or displacements caused by the mechanical rotation of a component 102, 104.

## Summary of the invention

It is an object of the invention to provide a polarization interferometer with reduced sensitivity with respect to defects and/or contamination in the set-up, which, however, avoids the drawbacks of the state of the art. In particular, the polarization interferometer shall be compact and able to perform measurements quickly.

The invention is based on the idea to provide a polarization interferometer which works without mechanical movement of components. This is achieved by introducing into the setup a twisted nematic liquid-crystal (LC) cell (TN cell) The TN cell has the property to rotate the polarization of light passing through it by $90°+n\cdot 180°$ (where n is an integer) when it is in the "off-state" (no electric field, $V = 0$), and does not affect the incident polarization when it is in the "on-state" (electric field applied to the cell, $V \neq 0$). The TN cell is preferably aligned such that the polarization axis of the polarizer is parallel or perpendicular to the director (that indicates the optical axis) at incidence. The rotation of the twist in the TN cell can be right-handed or left-handed.

Thus, by introducing a TN cell after the polarizer, the polarization of incident linearly polarized light can be rotated by 90°or not, depending on a voltage $V$ applied to the TN cell. In other words: the TN cell replaces the mechanical rotation of the polarizer that is necessary in prior-art interferometers.

Liquid crystals and, more specifically, TN cells are well-known and for instance described in P. Yeh and C. Gu, "Optics of liquid crystal displays", J. Wiley, 1999. They are widely used for liquid-crystal displays (LCDs). However, no application of liquid crystals in polarization interferometry is known to date. LCDs and interferometers lie in completely different technical fields. Consequently it is not at all obvious to seek in the field of LCDs for a solution to a problem in interferometry. It is entirely due to the present invention that a new field of application has been opened to LC technology.

The method according to the invention is for reducing noise in a polarization interferometer, wherein two orthogonally polarized components of incident light are caused to experience an optical path difference and are made interfere. A liquid-crystal cell is placed inside the interferometer. The interferometer is set into a first state in which said interfering light components are in a first phase relation. In this first state, a first interferogram is recorded. Then the interferometer is set into a second state in which said interfering light components are in a second phase relation being shifted by an odd multiple of 180° with respect to said first phase relation. In this second state, a second interferogram is recorded. Said second interferogram is subtracted from said first interferogram or vice versa, the result being a third interferogram with reduced noise. The interferometer is set into said first state and said second state, respectively, by varying an electric field applied to said liquid-crystal cell, thus rotating the polarization of linearly polarized light passing through said liquid-crystal cell.

The polarization interferometer for performing the method according to the invention comprises a birefringent medium. It further comprises means for making two orthogonally polarized light components interfere, said interference means being placed behind said birefringent medium. A liquid-crystal cell is placed inside the interferometer. Means for applying an electric field to said liquid-crystal cell are provided such that the polarization of linearly polarized light is rotated by said liquid-crystal cell depending on said electric field. The polarization interferometer preferably further comprises means for recording an interferogram appearing on said interference means, and means for subtracting two recorded interferograms.

The TN cell can be optimized for a specific application. Firstly, one should take care that the Mauguin condition (P. Yeh and C. Gu, "Optics of liquid crystal displays", J. Wiley, 1999) is fulfilled:

$$\frac{\lambda}{2} < \Delta n\cdot d\ ,$$

where $\Delta n$ is the birefringence of the liquid-crystal cell, d the thickness of the TN cell and $\lambda$ the wavelength of the incident light in vacuum. If this condition is not satisfied, the output light is elliptically polarized and the interferogram is distorted. Taking $\lambda$ = 550 nm and $\Delta n = 9\cdot 10^{-3}$, the Mauguin condition yields d > 30 µm; in this example, TN cells with a thickness of d = 40 µm or more should be used. Use of a liquid-crystal cell with a higher $\Delta n$ is also possible.

It may also be advantageous to have thin TN cells with a thickness of approximately 10 µm, since they have shorter relaxation times after switching, and this

decreases the measurement time. Typical measurement times with the interferometer according to the invention are in the range of a few milliseconds.

In order to get accurate measurements, it is important that the OPD distribution described above is not distorted. The introduction of a TN cell in the system can induce some unwanted phase retardation, especially when the system has a large acceptance angle. This is due to the angular dependency of anisotropic media, to which TN cells belong. This problem is known in the field of LC display technology (P. Yeh and C. Gu, "Optics of liquid crystal displays", J.Wiley, 1999). To solve this problem a thin film of birefringent material is inserted at the proper location in order to neutralize the angular dependency. Such compensation films can also be used in the present invention in order to avoid undesired distortions of the interferogram due to a high acceptance angle.

Another possibility to enhance the performance of the interferometer is by adding chiral dopant (right-or left-handed) to the liquid crystal used. This dopant increases the rotatory power of the liquid crystal and enables the director to rotate by more than 90°. By adjusting the chiral-dopant concentration (depending on the cell spacing and the desired twist) a twist of more than 90° can be achieved. Finally, a so-called super twisted nematic (STN) cell, which is described in P. Yeh and C. Gu, "Optics of liquid crystal displays", J. Wiley, 1999, is obtained.

Throughout this document, terms such as "optical" or "light" are used for the sake of simplicity. However, the invention is applicable to a wide range of the electromagnetic spectrum comprising the ultraviolet (UV), the visible (VIS) and the infrared (IR) range, and is thus not limited to the use with visible electromagnetic radiation.

Brief description of the drawings

The invention and, for comparison, the prior art are described in greater detail hereinafter relative to the attached schematic drawings.

Figure 1 shows a side view of an elementary polarization interferometer according to the prior art.

Figure 2 shows side views of three known arrangements of crystal plates for polarization interferometers, and in particular (a) a Soleil compensator, (b) a Wollaston prism, and (c) a Savart polariscope.

Figure 3 shows a known method for reducing background noise in an interferogram, and in particular (a) an in-phase interferogram, (b) an anti-phase interferogram, and (c) an interferogram without background noise.

Figure 4 shows a side view of a polarization interferometer according to the invention (a) in a first state and (b) in a second state.

Figure 5 shows a flow chart of the method for reducing background noise according to the invention.

Description of a preferred embodiment

**Figures 4(a)** and **(b)** show side views of a preferred embodiment of the polarization interferometer 1 according to the invention in two different states. The interferometer 1 comprises a polarizer 2 through which light 90 enters into the interferometer 1, and an analyzer (or second polarizer) 4 through which light leaves the interferometer 1.

The interferometer further comprises a birefringent element 3 placed between the polarizer 2 and the analyzer 4. The birefringent element 3 acts as a beam splitter. It may be, e.g., a uniaxial crystal plate 103 as shown in Fig. 1, one of the birefringent elements 103.1-103.3 shown in Fig. 2, any other birefringent element or a combination thereof. The polarizer 2 and the analyzer 4 are preferably oriented at 45° or -45° with respect to the optical axis of the birefringent element 3.

The interferometer 1 still further comprises a TN cell 7 placed between the polarizer 2 and the analyzer 4. A voltage V can be externally applied by appropriate means 71 to the TN cell 7. In **Figure 4(a)**, the TN cell 7 is in the "off-state", i.e., no electric field is applied to the TN cell 7 ($V$ = 0). In the off-state, the TN cell 7 rotates the polarization of incident light 90 by $90°+n\cdot180°$ (where n is an integer), i.e., essentially by 90°. In **Figure 4(b)**, the TN cell 7 is in the "on-state", i.e., a certain electric field is applied to the TN cell 7 ($V \neq 0$). In the on-state, the TN cell 7 does not affect the incident polarization. Typical voltages required are 3-50 V. The TN cell 7 must be aligned such that the polarization axis of the polarizer 2 is parallel or perpendicular to the director (that indicates the optical axis of the TN cell 7) at incidence. In other words: the optical axis of the TN cell 7 should be oriented at 45° or -45° with respect to the optical axis of the birefringent medium 3.

Thus, by introducing a TN cell 7 after the polarizer 2, the polarization of incident linearly polarized light 90 can be rotated by 90°or not, depending on a voltage $V$ applied to the TN cell 7. An in-phase interferogram 99.1 (analogous to the one shown in Fig. 3(a)) can be obtained by applying an appropriate voltage V to the TN cell 7 (parallel configuration). The in-phase interferogram 99.1 is recorded by an optoelectronic detector array 6 and preferably stored in an appropriate storage device. When the voltage V is switched off, the incident polarized light 90 is turned by 90° and the system is equivalent to the perpendicular arrangement shown in Fig. 3(b), thus yielding an anti-phase interferogram 99.2. The anti-phase interferogram 99.2 is also recorded by the optoelectronic detector array 6. An interferogram without background (as shown in Fig. 3(c)) is obtained by subtraction of the recorded interferograms 99.1,

99.2. The interferometer 1 preferably comprises digital or analog means 8 for performing the subtraction.

In the embodiment of Fig. 4, switching the TN cell 7 from one state to the other is equivalent to rotating the polarizer 2. Of course, the TN cell 7 can also be inserted after the birefringent element 3 just before the analyzer 4. In such an embodiment, switching the TN cell 7 would be equivalent to rotating the analyzer 4 instead of the polarizer 2.

A flow chart of the method for reducing background noise according to the invention is shown in **Figure 5**. A liquid-crystal cell, preferably a twisted nematic (TN) cell, is placed 501 inside the interferometer 1 (cf. Figs. 4(a) and 4(b)). The interferometer 1 is set 502 into a first state, e.g., the in-phase state where no voltage is applied to the TN cell 7 (cf. Fig. 4(a)). In this first state, a first interferogram 99.1 is recorded 503. Then an appropriate voltage V is applied 504 to the TN cell 7 such that the TN cell 7 rotates the polarization of linearly polarized light 9 passing through it (cf. Fig. 4(b)). In this second state of the TN cell 7, e.g., the anti-phase state, a second interferogram 99.2 is recorded 505. The anti-phase interferogram 99.2 is subtracted 506 from the in-phase interferogram 99.1 (or vice versa), the resulting difference interferogram 99.3 having a reduced noise. The subtraction 506 can be performed digitally, e.g., by a microprocessor, or by analog means.

<u>List of reference signs</u>

| | |
|---|---|
| 1, 101 | Interferometer |
| 2, 102 | Polarizer |
| 3, 103 | Birefringent element |
| 4, 104 | Analyzer |
| 5, 105 | Optical system |
| 6, 106 | Detector array |
| 7 | Liquid-crystal cell |
| 71 | Voltage supply |
| 8 | Subtraction means |
| 90 | Incident light |
| 91, 92 | Interfering light beams |
| 199 | Interferogram |
| 99.1, 199.1 | In-phase interferogram |
| 99.2, 199.2 | Anti-phase interferogram |
| 99.3, 199.3 | Difference interferogram |
| 501 | Placing liquid-crystal cell inside interferometer |
| 502 | Setting interferometer into in-phase state |
| 504 | Recording in-phase interferogram |
| 505 | Setting interferometer into anti-phase state |
| 506 | Subtracting anti-phase from in-phase interferogram |
| B | Background |
| d | Cell thickness |
| I | Intensity |
| $n_o$, $n_e$ | Ordinary and extraordinary refractive index |
| $\Delta n$ | Birefringence |
| OPD | Optical path difference |
| S | Signal |
| x | Position |
| $\lambda$ | Wavelength in vacuum |

**Claims**

**1.** A method for reducing noise in a polarization interferometer (1), wherein two orthogonally polarized components of incident light (90) are caused to experience an optical path difference and are made interfere, comprising the steps of:

setting (502) the interferometer (1) into a first state in which said interfering light components are in a first, in-phase relation;
recording (503) a first interferogram (99.1);
setting (504) the interferometer (1) into a second state in which said interfering light components (91, 92) are in a second, anti-phase relation wherein the polarization of said interfering light components (91, 92) are rotated by an odd multiple of 180° with respect to said first, in-phase relation;
recording (505) a second interferogram (99.2); and
subtracting (506) said second interferogram (99.2) from said first interferogram (99.1) or vice versa, the result being a third interferogram (99.3) with reduced noise;

**characterized in that**
a liquid-crystal cell (7) is placed (501) inside the interferometer (1) and the interferometer (1) is set into said first state and said second state, respectively, by varying an electric field applied to said liquid-crystal cell (7), thus rotating the polarization of linearly polarized light (90) passing through said liquid-crystal cell (7).

**2.** The method according to claim 1, wherein said liquid-crystal cell (7) is chosen to comprise a twisted nematic or a supertwisted nematic liquid crystal.

**3.** The method according to any of the previous claims, wherein said liquid-crystal cell (7) and said electric fields are chosen such that in said first state, the polarization of light (90) passing through said liquid-crystal cell (7) is rotated by $90° + n \cdot 180°$, where $n$ is an integer, and in said second state, the polarization of light (90) passing through said liquid-crystal cell (7) is not affected, or vice versa.

**4.** A polarization interferometer (1) for performing the method according to claim 1, comprising
a birefringent medium (3) and
interference means (4) for making two orthogonally polarized light components interfere, said interference means (4) being placed behind said birefringent medium (3),
**characterized by**
a liquid-crystal cell (7) placed inside the interferometer (1) and
means (71) for applying an electric field to said liquid-crystal cell (7) such that the polarization of linearly polarized light is rotated by said liquid-crystal cell (7) depending on said electric field.

**5.** The polarization interferometer (1) according to claim 4, wherein said liquid-crystal cell (7) comprises a twisted nematic or a supertwisted nematic liquid crystal.

**6.** The polarization interferometer (1) according to claim 4 or 5, wherein said liquid-crystal cell (7) has two states, namely, a first state in which the polarization of light (90) passing through said liquid-crystal cell (7) is rotated by $90° + n \cdot 180°$, where $n$ is an integer, and a second state in which the polarization of light (90) passing through said liquid-crystal cell (7) is not affected.

**7.** The polarization interferometer (1) according to any of the claims 4-6, additionally comprising means (6) for recording an interferogram (99.1, 99.2) appearing on said interference means (4) and means (8) for subtracting two recorded interferograms.

**8.** The polarization interferometer (1) according to claim 7, wherein said recording means (6) comprise an optoelectronic detector array.

**9.** The polarization interferometer (1) according to any of the claims 4-8, wherein said liquid-crystal cell (7) satisfies the condition

$$\frac{\lambda}{2} < \Delta n \cdot d ,$$

where $\Delta n$ is the birefringence of said liquid-crystal cell (7), d the thickness of said liquid-crystal cell (7) and $\lambda$ the wavelength of the incident light in vacuum.

**10.** The polarization interferometer (1) according to any of the claims 4-9, wherein said liquid-crystal cell (7) has an optical axis and said optical axis is oriented at 45° or -45° with respect to the optical axis of said birefringent medium (3).

**11.** The polarization interferometer (1) according to any of the claims 4-10, wherein an additional birefringent element is placed inside the interferometer (1) in order to neutralize an angular dependency of said liquid-crystal cell (7).

**12.** The polarization interferometer (1) according to any of the claims 4-11, wherein said interference means (4) are an analyzer oriented at 45° or -45° with respect to the optical axis of said birefringent medium (3), and wherein preferably a polarizer oriented at 45° or -45° with respect to the optical axis of said birefringent medium (3) is placed in front of said birefringent medium (3).

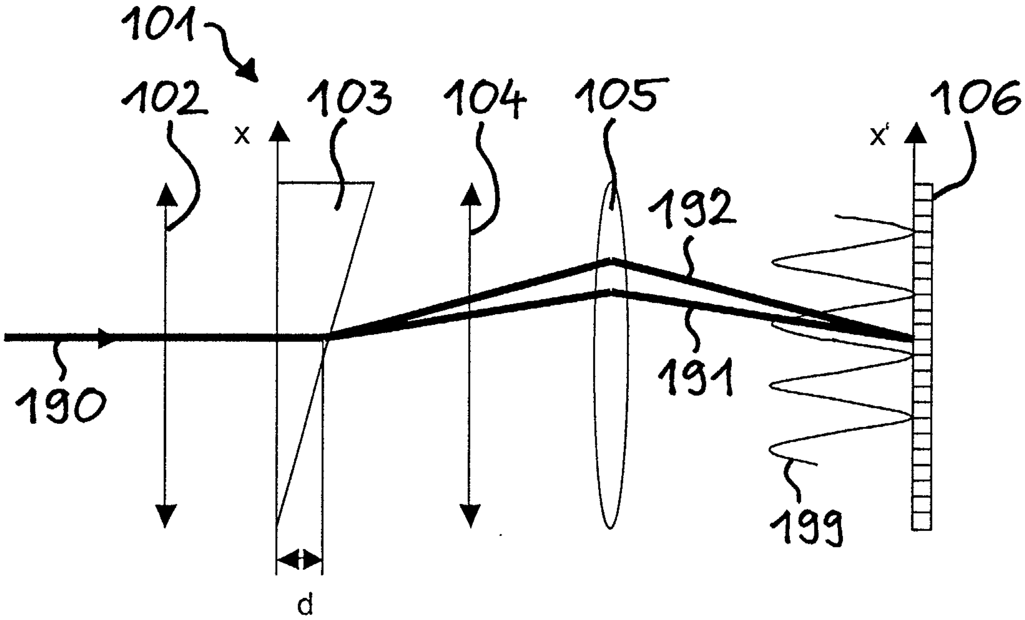


Fig. 1 PRIOR ART

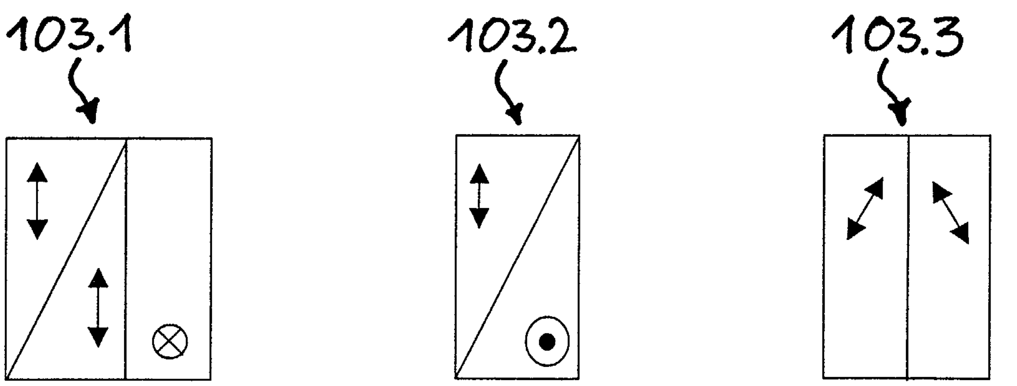


Fig. 2(a) Fig. 2(b) Fig. 2(c)

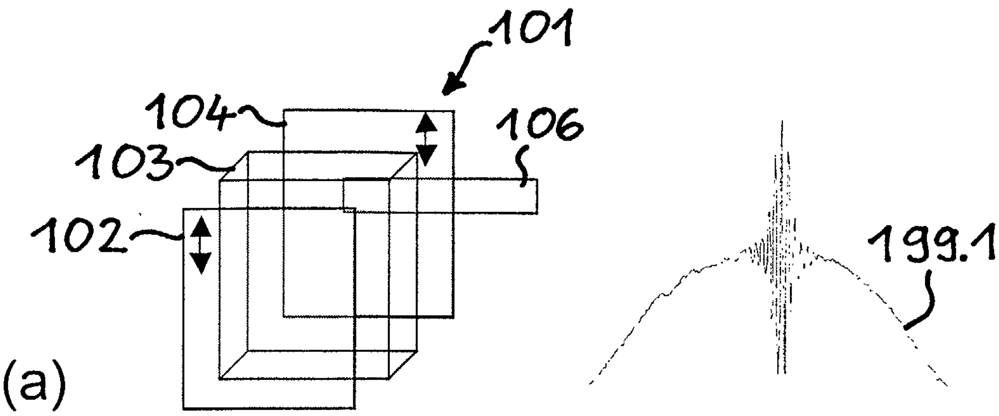


Fig. 3(a)

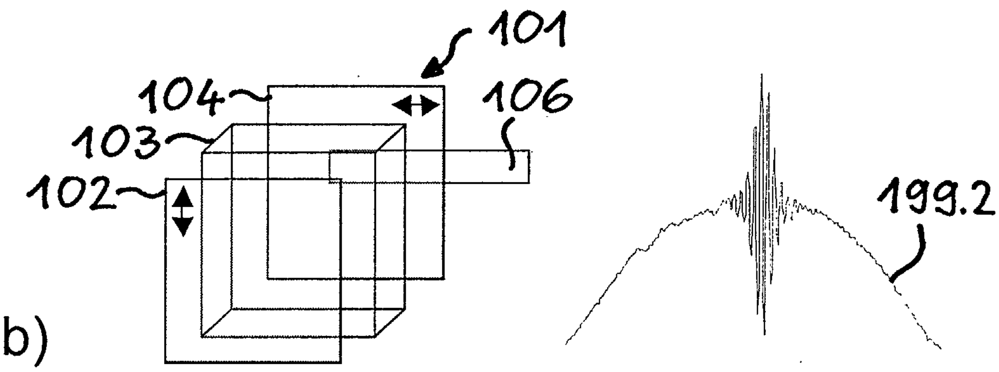


Fig. 3(b)

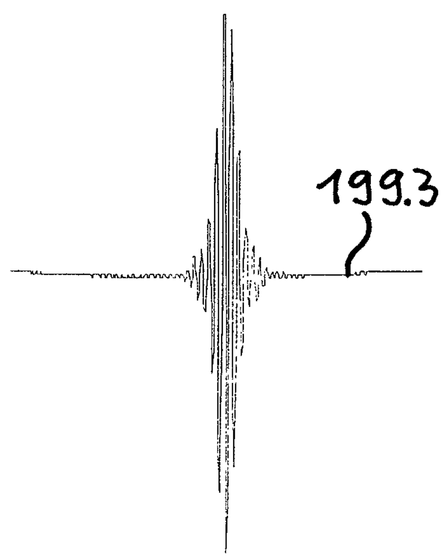


Fig. 3(c)

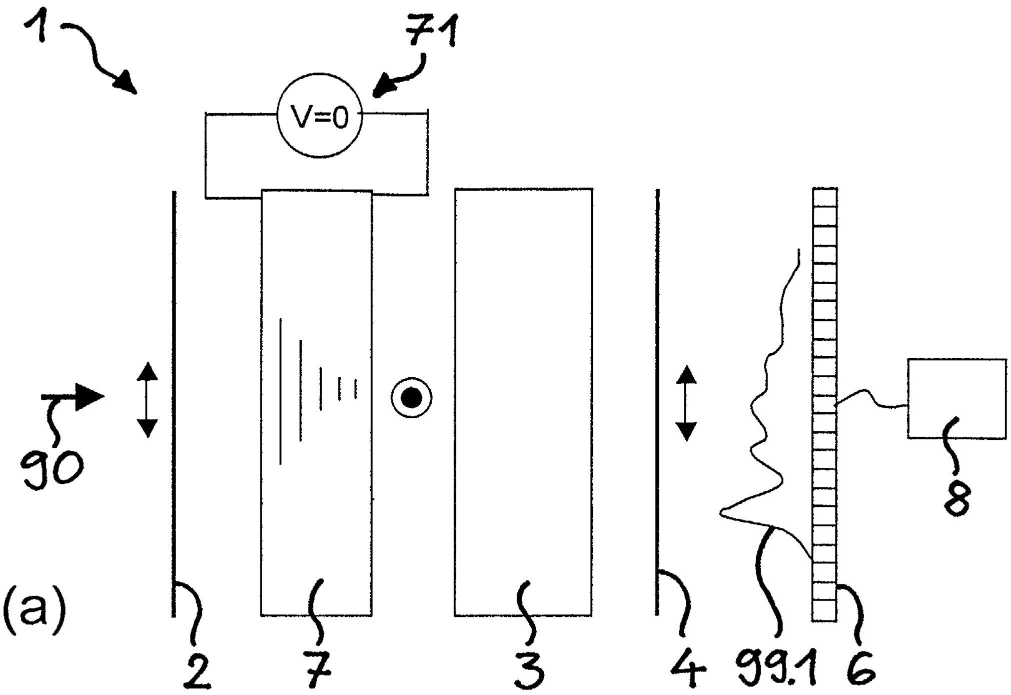


Fig. 4(a)

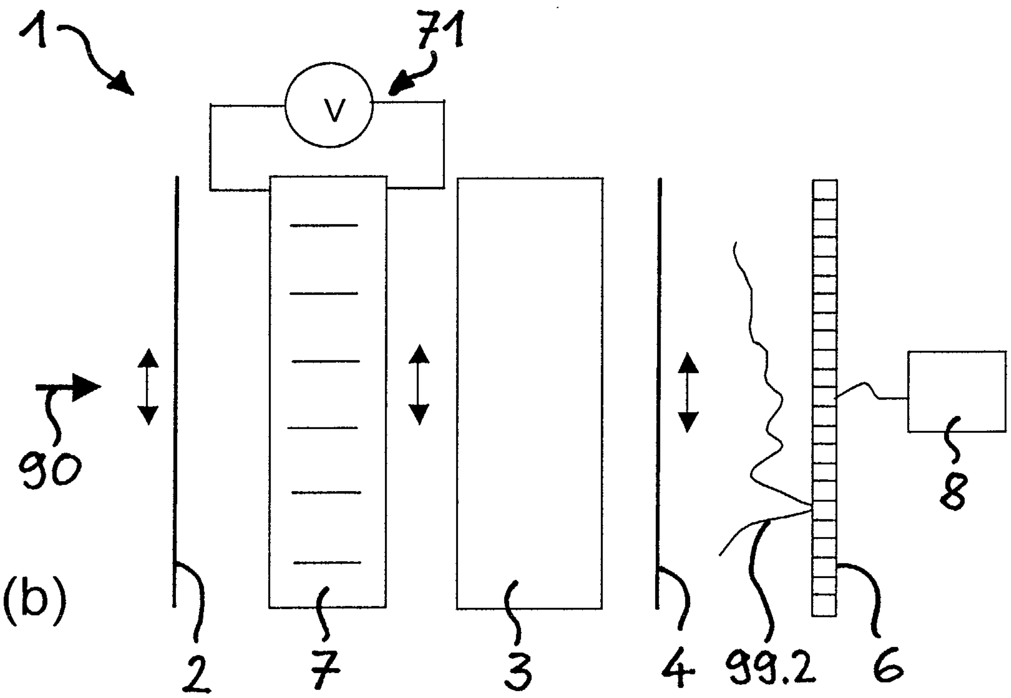


Fig. 4(b)

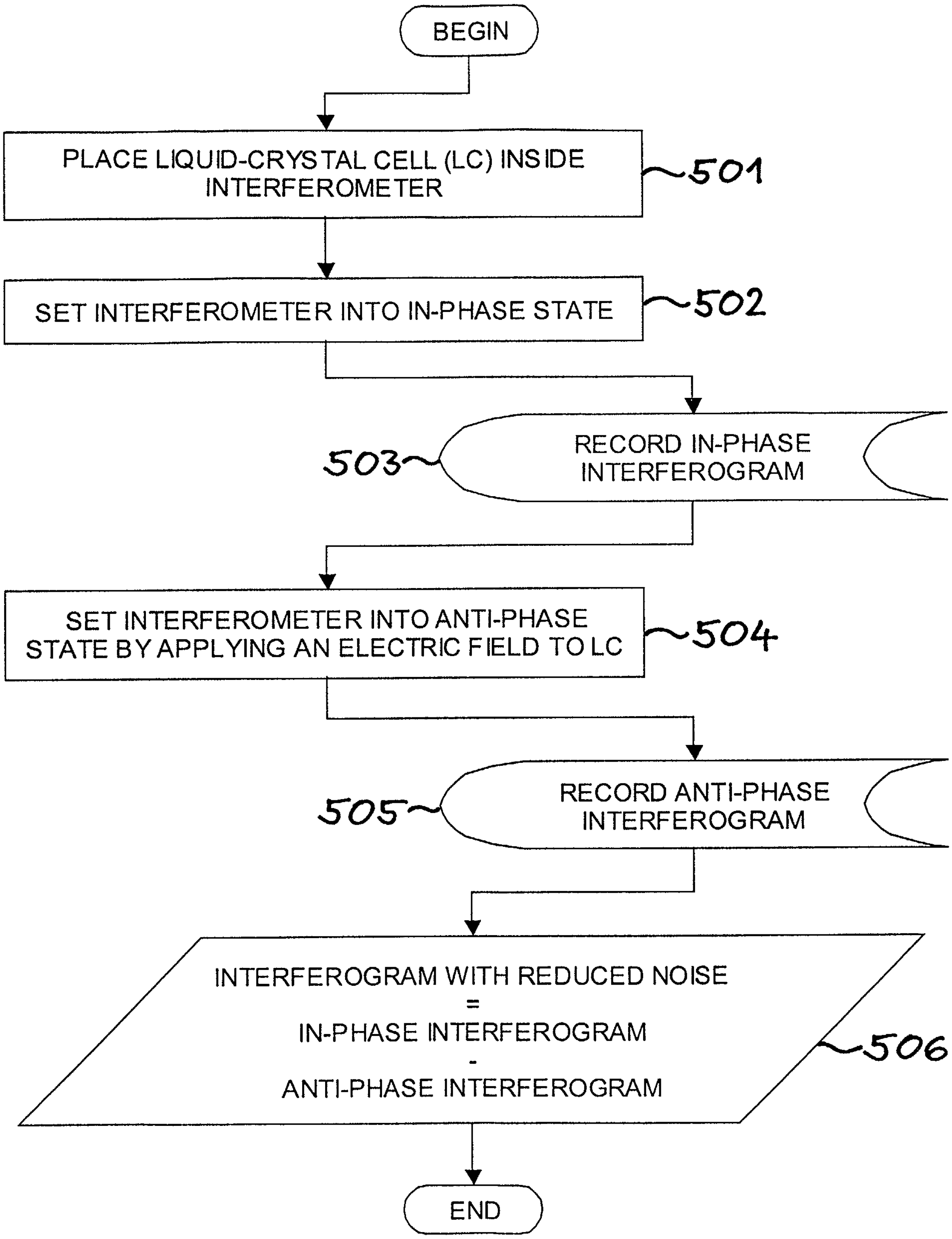
BEGIN
PLACE LIQUID-CRYSTAL CELL (LC) INSIDE INTERFEROMETER
501
SET INTERFEROMETER INTO IN-PHASE STATE
502
503
RECORD IN-PHASE INTERFEROGRAM
SET INTERFEROMETER INTO ANTI-PHASE STATE BY APPLYING AN ELECTRIC FIELD TO LC
504
505
RECORD ANTI-PHASE INTERFEROGRAM
INTERFEROGRAM WITH REDUCED NOISE
=
IN-PHASE INTERFEROGRAM
-
ANTI-PHASE INTERFEROGRAM
506
END

Fig. 5

European Patent Office

# EUROPEAN SEARCH REPORT

Application Number
EP 01 81 0714

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| Y | EP 0 939 323 A (SUISSE ELECTRONIQUE MICROTECH) 1 September 1999 (1999-09-01)<br>* column 3, line 4 - column 5, line 46 *<br>* figures 1-6 *<br>--- | 1-12 | G01J3/453 |
| D,Y | MAMORU HASHIMOTO ET AL: "MULTICHANNEL FOURIER-TRANSFORM INFRARED SPECTROMETER"<br>APPLIED OPTICS, OPTICAL SOCIETY OF AMERICA,WASHINGTON, US,<br>vol. 31, no. 28,<br>1 October 1992 (1992-10-01), pages 6096-6101, XP000306991<br>ISSN: 0003-6935<br>* page 6098, column 2, paragraph 2 *<br>* figure 5 *<br>--- | 1-12 | |
| Y | WO 01 02799 A (CAMBRIDGE RES & INSTRUMENTATIO)<br>11 January 2001 (2001-01-11)<br>* page 25, line 18 - page 26, line 23 *<br>--- | 9,11 | |
| | | | TECHNICAL FIELDS SEARCHED (Int.Cl.7) |
| A | WO 98 30868 A (ELECTRO OPTICAL SCIENCES INC) 16 July 1998 (1998-07-16)<br>* page 6, line 2 - page 8, line 32 *<br>* figure 2 *<br>--- | 1-12 | G01J |
| A | WO 95 02171 A (UNIV DUNDEE ;PADGETT MILES JOHN (GB); DUNCAN ALAN JAMES (GB); SIBB)<br>19 January 1995 (1995-01-19)<br>* figures 4,6 *<br>----- | 1,4 | |

The present search report has been drawn up for all claims

| Place of search | Date of completion of the search | Examiner |
|---|---|---|
| THE HAGUE | 17 December 2001 | Jacquin, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 01 81 0714

This annex lists the patent family membersrelating to the patent documents cited in the above-mentioned European search report.
The members are as contained in the European Patent Office EDP file on
The European Patent Office is in no way liable for these particulars which are merely given for the purpose of information.

17-12-2001

| Patent document cited in search report | | Publication date | Patent family member(s) | | Publication date |
|---|---|---|---|---|---|
| EP 0939323 | A | 01-09-1999 | EP | 0939323 A1 | 01-09-1999 |
| | | | US | 6222627 B1 | 24-04-2001 |
| WO 0102799 | A | 11-01-2001 | WO | 0102799 A1 | 11-01-2001 |
| WO 9830868 | A | 16-07-1998 | AU | 5958998 A | 03-08-1998 |
| | | | WO | 9830868 A1 | 16-07-1998 |
| | | | US | 5973784 A | 26-10-1999 |
| WO 9502171 | A | 19-01-1995 | AU | 7129494 A | 06-02-1995 |
| | | | DE | 4494905 T0 | 22-08-1996 |
| | | | WO | 9502171 A1 | 19-01-1995 |
| | | | GB | 2294778 A ,B | 08-05-1996 |
| | | | US | 5781293 A | 14-07-1998 |

EPO FORM P0459

For more details about this annex : see Official Journal of the European Patent Office, No. 12/82